# EUROPEAN PATENT APPLICATION

(11) **EP 3 604 909 A1**
(43) Date of publication of application: **05.02.2020**
(21) Application number: 18777748.7
(22) Date of filing: 30.03.2018
(51) Int. Cl.: F21V 8/00, C08F 290/06, F21S 2/00, G02B 1/14, G02B 5/02, G02B 6/00, G02F 1/13357, F21Y 115/10

(54) **LIGHT GUIDE PLATE ENCAPSULATION MEMBER AND PLANAR LIGHT SOURCE DEVICE OR LIGHTING DEVICE USING SAME**

(30) Priority: 31.03.2017 JP 2017073192
(71) Applicant: Tomoegawa Co., Ltd., Tokyo 104-8335 (JP)
(72) Inventor: SUGA, Shogo, Shizuoka-shi Shizuoka 421-0192 (JP); KATO, Masao, Shizuoka-shi Shizuoka 421-0192 (JP); SAKANO, Tsubasa, Shizuoka-shi Shizuoka 421-0192 (JP); SUGIYAMA, Masahide, Shizuoka-shi Shizuoka 421-0192 (JP)
(74) Representative: Hoffmann Eitle
(86) International application number: PCT/JP2018/013528
(87) International publication number: WO 2018/181854

(57) **Abstract**

A sealing member for a light guide plate which has sufficient adhesive strength with a light guide member, suppresses embedding of the light guide member into concave-shaped portions, and provides high smoothness to a lid face of the concave-shaped portions, a light guide plate using the sealing member for a light guide plate, and a lighting device or a display device using the light guide plate are provided. A sealing member for a light guide plate, which is made of one layer or more to be laminated to a face having concave portions so as to seal at least any of gas, liquid and vacuum, which has a refractive index that is different from a refractive index of a light guide member, into insides of the concave portions of the light guide member having: an emission face in which light incident from an end face is bent and outgoes to a surface direction; and the plural concave portions on the emission face and/or an opposite face that faces the emission face, wherein a layer contact with the face having the concave portions of the sealing member for a light guide plate is made of a sealing layer which contains resin composed of a repeating unit derived from urethane (meth)acrylate having a saturated cycloaliphatic group.

## Description

### Technical Field

The present invention relates to a sealing member for a light guide plate and a planar light source device or a lighting device which are used for an image display device such as an LCD and PDP, and for illumination of advertisements, display windows and the like.

### Background Art

As an aspect of a light guide plate, a light guide plate, which receives light from its end face, and reflects and refracts the light by plural concave lens shapes or dotted shapes (hereinafter, called as concave portions) formed on its surface so as to emit the light to an outside, has been known. However, if the surface having the concave portions formed thereon is an outermost surface, optical properties may be lost due to attachment of a stain or a scratch. Further, in a case of laminating with other layer, a thin air layer is inserted into a flat plane portion (a region other than the concave portions) on the surface having the concave portions formed thereon, thereby causing a problem that interference fringes or the like are generated.

Patent Literature 1 proposes a method of sealing air into fine reflection portions made of lens-shaped concave portions by using a thin-film pressure sensitive adhesive, a hot melt adhesive, a cured body obtained by tightly adhering a semicured body to a light guide member and curing the semicured body, a blocking resin sheet or the like as a sealing member.

### Citation List

### Patent Literature

Patent Literature 1: JP 2013-218052 A

### Summary of Invention

### Technical Problem

In a case of using a pressure sensitive adhesive as the sealing member as proposed in Patent Literature 1, the pressure sensitive adhesive may be embedded into the concave portions by pressure applied over time or during manufacture or use, whereby optical properties may be changed. Further, if using a hot melt adhesive, it may be melted again at a high temperature so as to deteriorate the optical properties, and in addition, adhesive strength to a smooth surface is weak in general.

Moreover, as the sealing member, a semicured body, in particular, UV-curable resin that has a remaining unreacted group is exemplified. This UV-curable resin can suppress the embedding of the sealing member into the concave portion by becoming in a semicured state, and thus can prevent the deterioration of the optical properties after bonding. However, general acrylic UV-curable resin is hard to increase its peel strength, if it is in the semicured state.

Furthermore, a blocking sheet has slightly pressure sensitive adhesiveness, and thus has a problem in handling ability.

In addition, various types of sealing members except for the above-stated hot-melt adhesive described in Patent Literature 1 have tackiness and pressure sensitive adhesiveness on their surfaces, and thus have problems that removal of a foreign substance or the like attached thereon during processing is difficult, a surface defect is likely to be caused thereby, and the like.

Further, when applying the light guide sheet as described in Patent Literature 1 to a reflective liquid crystal panel, light leakage from an opposite face that is opposite to an emission face is required to be suppressed to the least possible, and for that, the sealing member that serves as a lid of the concave portions after the sealing is required to be smooth.

### Solution to Problem

As a result of keen study, the present inventors have found that the above-described problem can be solved by a sealing member for a light guide plate having a specific structure, thereby having completed the present invention. That is, the present invention is as follows.

A present invention (1) is a sealing member for a light guide plate, which is made of one layer or more to be laminated to a face having concave portions
so as to seal at least any of gas, liquid and vacuum, which has a refractive index that is different from a refractive index of a light guide member, into insides of the concave portions
of the light guide member having: an emission face in which light incident from an end face is bent and outgoes to a surface direction; and the plural concave portions on the emission face and/or an opposite face that faces the emission face, wherein
a layer contact with the face having the concave portions of the sealing member for a light guide plate is made of a sealing layer which contains resin composed of a repeating unit derived from urethane (meth)acrylate having a saturated cycloaliphatic group.

A present invention (2) is the sealing member for a light guide plate according to the invention (1), wherein the urethane (meth)acrylate having the saturated cycloaliphatic group is
urethane (meth)acrylate (I) which is a reactant of: hydroxyl group-containing alkyl (meth)acrylate; diol; and diisocyanate or
urethane (meth)acrylate (II) which is a reactant of: isocyanate group-containing alkyl (meth)acrylate; diol; and diisocyanate.

A present invention (3) is the sealing member for a light guide plate according to the invention (1), wherein the acrylate (I) and (II) having the saturated cycloaliphatic group includes:
below-described Structure A containing a saturated cycloaliphatic group R¹; and
below-described Structure C containing a saturated cycloaliphatic group R³, where,

Structure A: -CO-NH-R¹-NH-CO-

Structure C: -O-R³-O-.

A present invention (4) is the sealing member for a light guide plate according to the invention (3), wherein the acrylate (I) or (II) having the saturated cycloaliphatic group further includes below-described Structure B containing a saturated aliphatic chain R², where,

Structure B: -O-R²-CO-.

A present invention (5) is a light guide plate comprising at least: the light guide member; and the sealing member for a light guide plate according to any one of the inventions (1) to (4).

A present invention (6) is the light guide plate according to the invention (5), wherein, in a maximum rectangular shape on the sealing layer of the sealing member for a light guide plate to be inscribed in the surface shape of the concave portion, an average value of arithmetic average roughness Ra on lines which pass at a center point of the rectangular shape and are parallel to respective sides of the rectangle in the rectangular shape is 0.1 µm or less.

A present invention (7) is the light guide plate according to the invention (5) or (6), wherein 90° peel strength (conforming to JIS K6854) at an interface between the sealing layer of the sealing member for a light guide plate and the light guide member is 0.6 N/25 mm or more.

A present invention (8) is the light guide plate according to any one of the inventions (5) to (7), wherein, in a case where a normal direction with respect to the emission face of the light guide plate or the light guide member is specified as 0°, and
a direction perpendicular to an end face of the light guide plate or the light guide member to which light is incident from a light source is specified as 90°, where
a value (La) is obtained by integrating luminance in a range from -70° to 70° among light that is incident from the end face of the light guide plate or the light guide member, and outgoes from the emission face of the light guide plate or the light guide member,
a value (Lb) is obtained by integrating luminance in a range from 110° to 250° among light that outgoes from an opposite face on an opposite side of the emission face of the light guide plate or the light guide member, and
a ratio (La/Lb) is defined as contrast (C),
a ratio (Cx/Cy) between contrast (Cx) of the light guide plate and contrast (Cy) of the light guide member is 0.5 or more.

A present invention (9) is the light guide plate according to any one of the inventions (5) to (8), wherein a reflection member and/or a diffusion member is further laminated to the light guide plate.

A present invention (10) is a lighting device or a display device, comprising the light guide plate according to any one of the inventions (5) to (9) and a light source.

### Advantageous Effects of Invention

According to the present invention, a sealing member for a light guide plate which has sufficient adhesive strength with a light guide member, suppresses the light guide member from being embedded into concave-shaped portions, and provides high smoothness to a lid face of the concave-shaped portions; a light guide plate using the sealing member for a light guide plate; and a lighting device or a display device using the light guide plate are provided.

### Brief Description of Drawings

Fig. 1 is a schematic view illustrating configurations of a light guide plate and a light guide member.
Fig. 2 is a schematic view illustrating progress of light in the light guide plate.
Fig. 3 includes a top view and a cross-sectional view which illustrate an example of shapes of concave portions (121).
Fig. 4 is a schematic view illustrating a distribution example of dotted structures in the light guide plate.
Fig. 5 includes a cross-sectional view of the concave portions and a sealing member for a light guide plate that covers the concave portions and a schematic view illustrating measuring positions of surface roughness.
Fig. 6 is an explanatory drawing for contrast measurement of the light guide plate and the light guide member.
Fig. 7 is a schematic view illustrating a device used for the contrast measurement.

### Description of Embodiments

Hereinafter, following items will be described in this order.
1. Light Guide Plate
1-1. Configuration
2. Respective Parts
2-1. Light Guide Member
2-1-1. Structure
2-2. Configuration of Sealing Member for Light Guide Plate
2-2-1. Composition of Sealing Layer
2-2-2. Coating Base
2-2-3. Properties
2-2-4. Method for Manufacturing Sealing Member for Light Guide Plate
2-2-5. Using Method
3. Application Purpose of Planar Light Source Device or Lighting Device

### 1. Light Guide Plate

Hereinafter, regarding a light guide plate according to the present invention, a light guide member and a sealing member for a light guide plate will be described in detail in this order. Incidentally, configurations that will be shown here are just an example, and the present invention is not limited to them at all.

### 1-1. Configuration

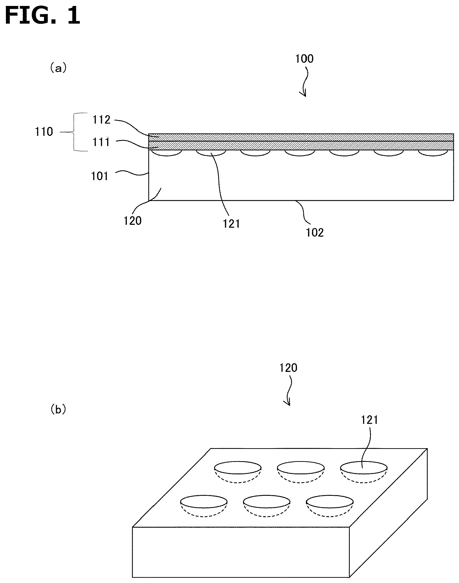

A light guide plate (100) according to the present invention is composed of: a light guide member (120) having concave portions (121) provided thereon; and a sealing member for a light guide plate (110) to be laminated on a surface of the light guide member (120) and to seal the light guide member (120) (Fig. 1).

The sealing member for a light guide plate (110) seals at least any of air, liquid and vacuum into the concave portions (121) while being laminated. By this sealing, deterioration of optical properties of the light guide plate, which is caused due to attachment of dirt or a flaw to the concave portions (121), can be prevented.

Further, in a case of not performing bond sealing when laminating other layer (for example, a polarizing plate or a retardation plate) on a concave portion-side surface of the light guide member having the concave portions (121), a thin air layer is possibly inserted between: the concave portion-side surface of the light guide member except for the concave portions (121); and the other layer, whereby interference fringes may be generated. By intervening the sealing member for a light guide plate (110), formation of such an air layer can be prevented, whereby the generation of interference fringes can be prevented.

### 2. Respective Parts

### 2-1. Light Guide Member

As the light guide member (120) according to the present invention, well-known light guide members can be used. The light guide member (120) can receive light emitted from a light source by its light incident end face (101) (on a side face side) of the light guide plate (this light becomes incident light), can allow the light to propagate therein, and can allow the light to outgo to an emission face (102) side.

### 2-1-1. Structure

The light guide member (120) can be composed of a transparent member such as a plate and a film, or a laminate of these members. A material of the light guide member (120) may be a transparent member, and for example, transparent resin, glass and the like can be exemplified, but transparent resin is preferable, and thermoplastic resin with high transparency is more preferable. As the thermoplastic resin with high transparency, for example, polyolefin-based resin, vinyl-based resin, acrylic-based resin, polyamide-based resin, polyester-based resin, polycarbonate resin, polyurethane-based resin, polyether-based resin and the like can be exemplified. Among them, polycarbonate resin, acrylic-based resin and urethane-based resin, which have no absorption region of wavelengths in a visible light region, are preferable from the perspectiveof the transparency.

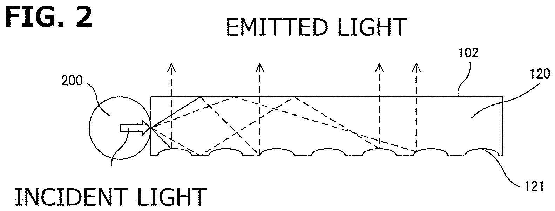

Light incident from a light source (200) that is provided on a side face of the light guide member (120) into the light guide member progresses in the light guide member (120), while repeating total reflection by inner surfaces of the light guide member (Fig. 2). The light guide member (120) is provided with plural concave portions (121) that changes reflection angles when the light is totally reflected, and the light whose reflection angle is changed by the concave portions (121) can outgo via the emission face (102) to an outside.

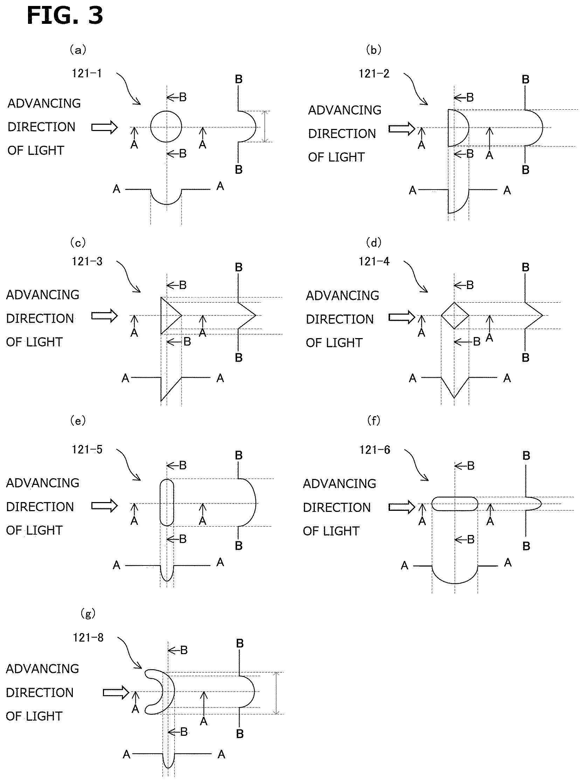

As a shape of the concave portion (121) which changes the reflection angle of the light according to the present invention, a concave lens shape and the like can be exemplified. These structures may be used alone, or the plural structures may be used in combination. The shape of the concave portion is not limited particularly, but for example, shapes shown in Figs. 3(a) to 3(g) and the like can be exemplified.

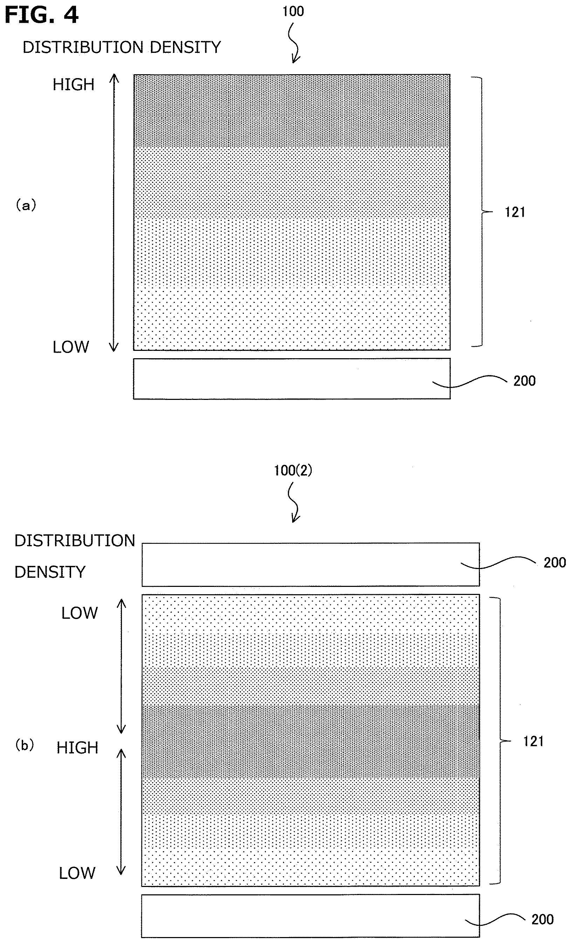

Also, arrangement of the concave portions (121) is not limited particularly, and a plurality of the concave portions (121) can be arranged at random on the surface of the light guide member. Further, the concave portions (121) can be arranged so that distribution density of the concave portions may be higher as a distance from a light source of the light guide plate is longer (Fig. 4(a)). Incidentally, in a case of providing a light source also in other side part of the light guide member, uniformity of light in the emission face can be improved, so that the above-described arrangement and distribution density of the concave portions can be adjusted as appropriate (Fig. 4(b)).

### 2-2. Configuration of Sealing Member for Light Guide Plate

The sealing member for a light guide plate (110) used in the present invention may have a multilayer structure, but in the sealing member for a light guide plate (110), a layer contact with a surface of an opposite face which is a surface opposite to the emission face of the light guide plate is at least necessary to be a sealing layer (111) containing resin that is composed of a repeating unit derived from urethane (meth)acrylate having a saturated cycloaliphatic group.

The sealing member for a light guide plate preferably has a layer composition that includes the above-described sealing layer (111) and a below-described coating base (112) for coating the sealing layer.

### 2-2-1. Composition of Sealing Layer

The sealing layer (111) of the sealing member for a light guide plate according to the present invention is composed of the repeating unit derived from urethane (meth)acrylate having a saturated cycloaliphatic group, which is a monomer, and the repeating unit has a single or plural kinds of saturated cycloaliphatic groups.

The urethane (meth)acrylate having the saturated cycloaliphatic group is preferably composed of a repeating unit of urethane (meth)acrylate (I) which is a reactant of: hydroxyl group-containing alkyl (meth)acrylate; diol; and diisocyanate or a repeating unit of urethane (meth)acrylate (II) which is a reactant of: isocyanate group-containing alkyl (meth)acrylate; diol; and diisocyanate. Hereinafter, the urethane (meth)acrylate having the saturated cycloaliphatic group that is composed of the repeating unit having the structure derived from the urethane (meth)acrylate (I) or (II), which is the preferable example, will be described in detail.

The above-described structure derived from the urethane (meth)acrylate (I) or (II) means a monomeric unit of the urethane (meth)acrylate (I) or (II), that is, a structure obtained by cleaving a double bond in a (meth)acryloyl group in the urethane (meth)acrylate (I) or (II), which is a monomer, and is double-functionality, because of having parts in which the double bonds of the (meth)acryloyl group are cleaved at mainly both ends.

The above-described repeating unit has a urethane bond (-NH-CO-O-). The number of the urethane bonds is not limited particularly, and is, for example, 1 to 8. Since such urethane bonds are polar groups, and urethane bonds in each repeating unit become close to each other by intermolecular force.

Whereas, a saturated cycloaliphatic structure is a nonpolar ring structure, and thus has a skeleton which is more rigid than that of a saturated aliphatic chain from the perspectiveof its molecular structure.

As a result, the sealing layer of the sealing member for a light guide plate which is composed of the above-described repeating unit exhibits: the high effect for suppressing the embedding of the light guide member into the concave portions; and the high smoothness of the lid face of the concave portions.

A monomeric unit of the above-described urethane (meth)acrylate has a single or plural kinds of saturated cycloaliphatic structures. The saturated aliphatic structure is not particularly limited, but is preferably a saturated cycloaliphatic structure having a five-membered ring or more from the perspectiveof increasing cohesive force which is resulted from a molecular weight. An upper limit of the number of members of the ring is not limited particularly, but is, for example, 15 or less, and is preferably 10 or less from the perspectiveof easiness of synthesis of the monomer that is a raw material of the sealing layer of the sealing member for a light guide plate. In a case where the saturated cycloaliphatic structure has plural ring structures, the above-described number of members of the ring represents the number of members of the maximum ring structure, and in a case where the saturated cycloaliphatic structure has a bicyclo ring or a tricyclo ring, the number of members of the ring means the number of members of the ring structure excluding the carbon number of a bridge that links carbon bridgeheads. For example, in the case of a tricyclodecane ring, the number of members of the ring is 9.

A main chain of the ring structure of the saturated cycloaliphatic structure may be composed of only carbon atoms, and may be composed of oxygen atoms and/or nitrogen atoms in addition to the carbon atoms. Further, to the carbon atoms in the above-described ring structure, a straight chain and/or a branched chain having 1 to 10 carbon atoms may be added.

As an example of the above-described saturated cycloaliphatic structure, a 3,5,5-trimethylcyclohexane ring, a tricyclodecane ring, an adamantane ring, a norbornene ring and the like can be exemplified. The above-described saturated cycloaliphatic structure may be bonded with a urethane bond group via a saturated aliphatic chain, and rigidity of the repeating unit can be adjusted suitably by changing the carbon number of the saturated cycloaliphatic chain. The saturated cycloaliphatic chain may have a straight chain structure or a branched chain structure, and the straight chain structure may be, for example, -(CH₂)ₙ- (n is an integer ranging from 1 to 10), and is particularly preferably -CH₂- or -(CH₂)₂-from the perspectiveof decreasing flexibility and enhancing the rigidity of the repeating unit. Whereas, as the branched chain structure, a structure obtained by substituting a hydrogen on at least one carbon in the above-described straight chain structure with a methyl group, an ethyl group, a propyl group, a butyl group, a pentyl group or the like can be exemplified.

In a case where the above-described 3,5,5-trimethylcyclohexane ring is bonded with two urethane bonds via methylene chains, a 3-methylene-3,5,5-trimethylcyclohexane ring is bonded with the respective urethane bonds, and in a case where the tricyclodecane ring is bonded with the two urethane bonds via the methylene chains, a dimethylenetricyclodecane ring is bonded with the respective urethane bonds.

The above-described 3-methylene-3,5,5-trimethylcyclohexane ring and dimethylenetricyclodecane ring are preferable ring structures, and exhibit the high effect for suppressing the embedding of the light guide member into the concave portion and the high smoothness of the lid face of the concave portions in the sealing layer of the sealing member for a light guide plate which contains either of these ring structures in the polymer chain.

The main chain of the repeating unit may contain a saturated aliphatic chain having 5 to 10 carbon atoms, beside the saturated cycloaliphatic structure. If the carbon number of the saturated aliphatic chain is 5 or more, flexibility is added to the repeating unit by the saturated aliphatic chain that has the long chain and flexibility, whereby brittleness of the sealing layer of the sealing member for a light guide plate is decreased. Whereas, if the carbon number is 10 or less, decrease of adhesive strength, which is caused by the addition of the excessive flexibility, can be suppressed. The saturated aliphatic chain may have a straight chain structure or a branched chain structure. The above-described saturated aliphatic chain composes a part of the repeating unit as a structure intervening, for example, a urethane bond or an ester bond.

As an example of the straight chain structure, -(CH₂)ₙ₁- (n1 is an integer ranging from 5 to 10) can be exemplified, and -(CH₂)₅- is particularly preferable. Whereas, as the branched chain structure, a structure obtained by substituting a hydrogen on at least one carbon in the above-described straight chain structure with a methyl group, an ethyl group, a propyl group, a butyl group, a pentyl group or the like can be exemplified.

As an example of the above-described repeating unit, a structure containing: below-described Structure A which contains a saturated cycloaliphatic structure R¹; and below-described Structure C which contains a saturated cycloaliphatic structure R³ can be exemplified.

-CO-NH-R¹-NH-CO- (Structure A)

-O-R³-O- (Structure C)

This repeating unit can be obtained from urethane (meth)acrylate which is obtained by using, for example, (1) diisocyanate containing R¹, (2) diol containing R³, and (3) hydroxyl group-containing alkyl (meth)acrylate or isocyanate group-containing alkyl (meth)acrylate, and thus can be manufactured easily. As an example, a ratio between above-described Structures A and C can be m+1 : m or m : m+1, where the above-described m denotes 1 to 4.

In addition, the above-described repeating unit may further contain below-described Structure B which contains a below-described saturated aliphatic chain R².

-O-R²-CO- (Structure B)

This repeating unit can be obtained from urethane (meth)acrylate which is obtained by using, for example, diisocyanate containing R¹, ester containing R² (to be used arbitrarily), diol containing R³, and hydroxyl group-containing alkyl (meth)acrylate or isocyanate group-containing alkyl (meth)acrylate, and thus can be manufactured easily. As an example, a ratio between above-described Structures A, B and C can be m+1 : m(r+s) : m, m : m(r+s) : m+1, or m : k+n : m+1, where the above-described m denotes 1 to 4, and r and s respectively denote 0 to 2, and a sum of r and s denotes 0 to 2.

A specific example of the above-described repeating unit that has the saturated cycloaliphatic structure and the saturated aliphatic chain will be shown below. As shown in General Formula (1), the structure derived from (meth)acrylate is a structure in which a carbon-carbon double bond in the (meth)acrylate structure H₂C=CH-CO₂-(or H₂C=C(CH₃)-CO₂-) is cleaved to become a single bond.

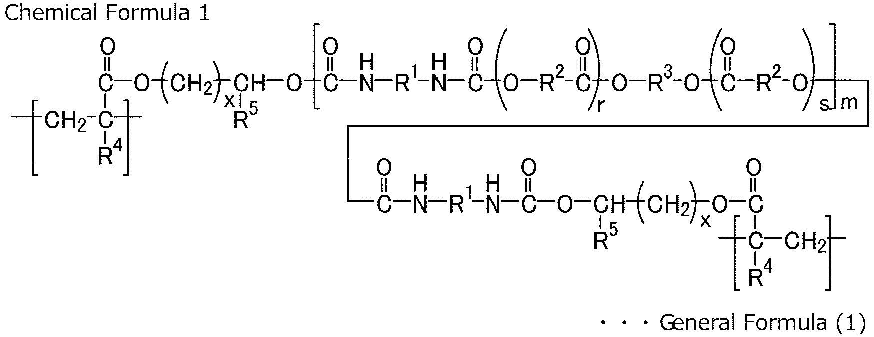

(In General Formula (1), R¹ denotes a saturated cycloaliphatic structure, R² denotes a straight or branched saturated aliphatic chain having 5 to 10 carbon atoms, R³ denotes a saturated cycloaliphatic structure that is different from R¹, R⁴ denotes a hydrogen atom or a methyl group, R⁵ denotes a hydrogen atom, a methyl group or an ethyl group, m denotes 1 to 4, r and s respectively denote 0 to 2, and a sum of r and s is 0 to 2, and x denotes 0 to 3.)

A preferable structure in which, in above-described General Formula (1), R¹ is a 3-methylene-3,5,5-trimethylcyclohexane ring, R² is -(CH₂)₅-, R³ is a dimethylenetricyclodecane ring, R⁴ and R⁵ are hydrogen atoms, r and s are 1, and x is 1 will be shown below.

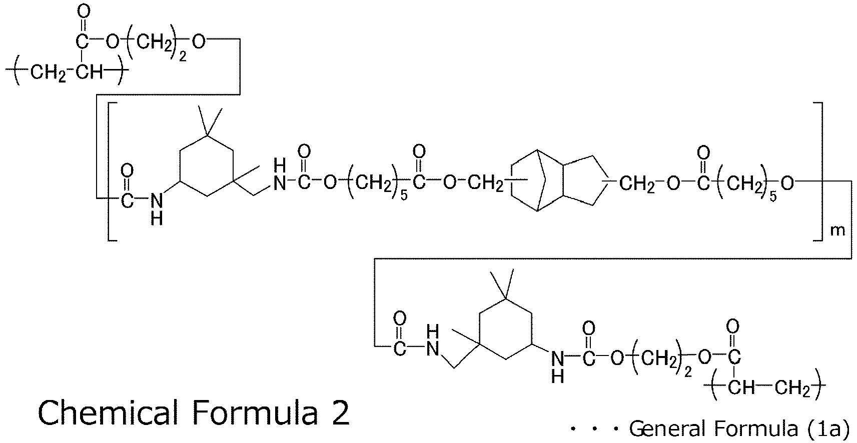

A structure of the repeating unit which constitutes the sealing layer of the sealing member for a light guide plate according to the present invention can be judged by analyzing the sealing layer of the sealing member for a light guide plate by thermal decomposition GC-MS and FT-IR. In particular, the thermal decomposition GC-MS is useful, because it can detect a monomeric unit contained in the sealing layer of the sealing member for a light guide plate as a monomer component.

The sealing layer of the sealing member for a light guide plate may contain various kinds of additives such as a ultraviolet absorber, a leveling agent and an antistatic agent, unless losing: a high adhesive property of the sealing layer of the sealing member for a light guide plate; the high effect for suppressing the embedding of the light guide member into the concave portion; and the high smoothness of the lid face of the concave portions. Thereby, an ultraviolet absorption property, an antistatic property and the like can be added to the sealing layer of the sealing member for a light guide plate.

A film thickness of the sealing layer of the sealing member for a light guide plate according to the present invention is not limited particularly, but is, for example, 50 µm or less, is more preferably 25 µm or less, and is particularly preferably 10 µm or less.

### 2-2-2. Coating Base

Since a coating base has a role of protecting the light guide member together with the sealing layer, and functions as a part of the light guide plate, the coating base preferably has transparency, and preferably has a refractive index that is equivalent to those of the light guide member and the sealing layer.

A thickness of the coating base is not limited particularly, but is preferably 25 µm or more and 5 mm or less, is more preferably 50 µm or more and 1 mm or less, and is further preferably 80 µm or more and 500 µm or less, from the perspectiveof the easiness of its manufacture and the function of protecting the light guide member.

### 2-2-3. Properties

A 90° peel strength (conforming to JIS K6854) at an interface between the sealing layer of the sealing member for a light guide plate according to the present invention and the light guide member can be 0.6 N/25 mm or more. If the 90° peel strength is less than 0.6 N/25 mm, exfoliation or a rise may be generated.

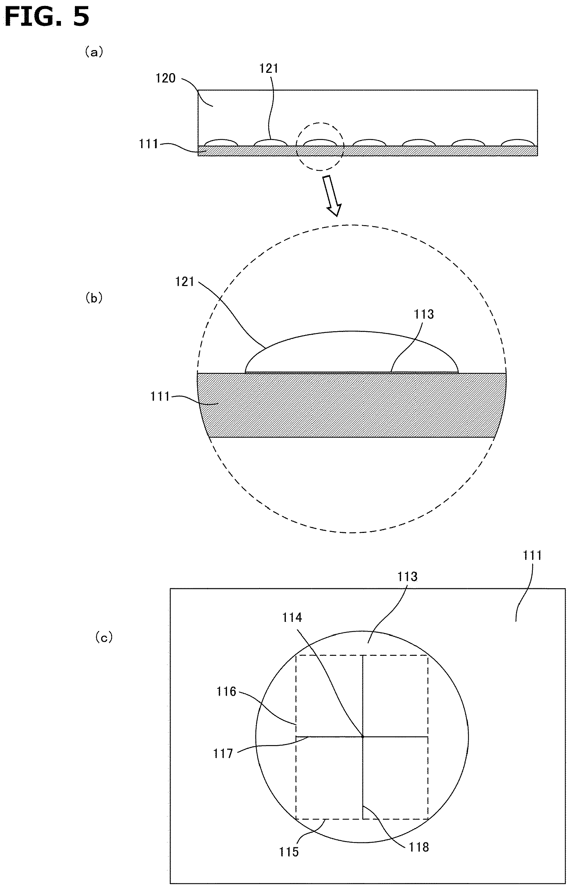

After sealing the sealing member for a light guide plate according to the present invention onto the light guide member, in a maximum rectangular shape (a rectangular shape providing its area to be maximum) on the sealing layer of the sealing member for a light guide plate to be inscribed in the surface shape of the concave portion of the light guide member, an average value of arithmetic average roughness Ra on lines that pass at a center point of the rectangular shape and are parallel to the respective sides of the rectangle in the rectangular shape can be 0.1 µm or less (Fig. 5).

A region of a surface (113), which faces the concave portions, of the sealing layer of the sealing member for a light guide plate that covers a front face of the concave portion, partly enters the concave portions, while generally performing sealing, whereby concavity and convexity are likely to be generated on the surface, so that the optical properties of the light guide plate is likely to be deteriorated by these concavity and convexity.

However, the sealing member for a light guide plate of the present invention can prevent the deterioration of the optical properties of the light guide plate, by containing at least the resin composed of the repeating unit derived from the urethane (meth)acrylate having the saturated cycloaliphatic group in the sealing layer, and by having the average value of the arithmetic average roughness Ra in the above-described surface region that is 0.1 µm or less. The average value of the arithmetic average roughness Ra is more preferably 0.05 µm or less, and is further preferably 0.02 µm or less.

A method for measuring the arithmetic average roughness Ra will be described below in detail.

Fig. 5 includes a cross-sectional view of the concave portions and the sealing member for a light guide plate which covers the concave portions, and a schematic view illustrating measuring positions of the surface roughness. Herein, in Fig. 5, for the sake of convenience, explanation will be provided based on the assumption that a surface shape of the concave portion of the light guide member is circular.

On the surface (113) of the sealing layer of the sealing member for a light guide plate to be inscribed in the surface shape of the concave portion of the light guide member, embedding (entering) of the sealing layer into the surface shape (herein, a circular shape) of the concave portion of the light guide member is much more likely to occur near an inside of a circumference of the concave portion than near its center, so that the arithmetic average roughness Ra according to the present invention is measured at positions excluding the position where this embedding is likely to occur.

That is, in the maximum rectangular shape on the sealing layer of the sealing member for a light guide plate to be inscribed in the surface shape of the concave portion of the light guide member, lines which passes at a center point (114) of the rectangular shape and are parallel respectively to one side (115) of the rectangle in the rectangular shape {short side (115)} and a side (116) thereof adjacent to the one side {long side (116)} are denoted by D1 (117) and D2 (118) in this order. Then, arithmetic average roughness Ra in ranges of these D1 and D2 is measured, and the thus obtained respective values are denoted by Ra1 and Ra2 in this order, whereby an average value between these Ra1 and Ra2 is represented as the arithmetic average roughness Ra of the present invention, which is used for evaluating smoothness of the lid face of the concave portions.

A measurement device used herein is not limited particularly, and a known measurement device can be used. For example, a method using a contact-type profile measurement device or a noncontact-type confocal laser microscope, and the like can be exemplified, as far as the method conforms to the measurement method specified in ISO4287:1997.

Further, for the sake of convenience, the above explanation has been provided based on the assumption that the surface shape of the concave portion of the light guide member is circular. However, also in a case where the surface shape of the concave portion of the light guide member is not circular, in the maximum rectangular shape of the sealing layer of the sealing member for a light guide plate to be inscribed in the surface shape of the concave portion of the light guide member, the lines that pass at the center point of the rectangular shape and are parallel to the respective sides of the rectangle in the rectangular shape are used, whereby the arithmetic average roughness Ra can be obtained by a similar measurement method.

Where contrast of the light guide plate while it is provided in the light guide member is denoted by (Cx), and contrast of only the light guide member is denoted by (Cy), the sealing member for a light guide plate of the present invention can be set to have a ratio (Cx/Cy) to be 0.5 or more.

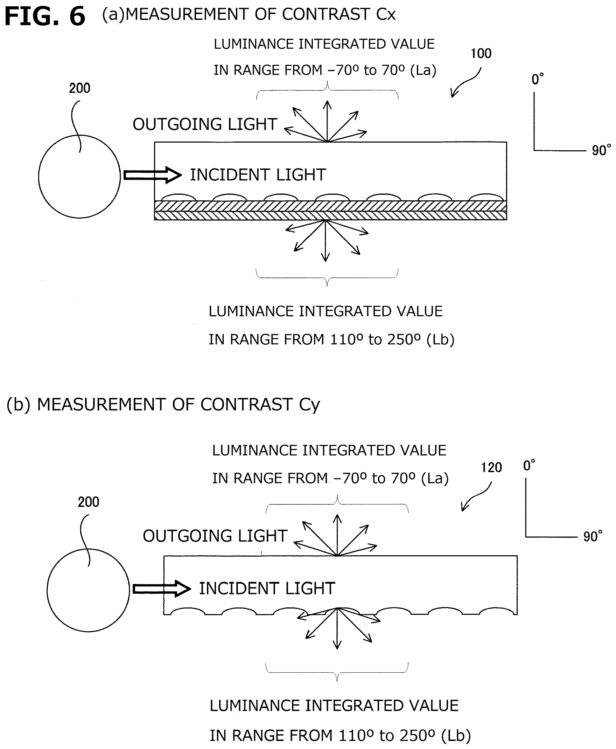

Hereinafter, the contrast will be described in detail. As illustrated in Fig. 6, a normal direction with respect to an emission face of the light guide plate (100) or the light guide member (120) is specified as 0°, a direction perpendicular to an end face of the light guide plate or the light guide member, to which light is incident from a light source, is specified as 90°. Light emitted by the light source is incident into the end face of the light guide plate or the light guide member, progresses inside the light guide plate or the light guide member, is reflected and diffused by the concave portion, and outgoes from the emission face of the light guide member. Herein, a luminance integrated value of the light that outgoes in a range from -70° to 70° is denoted by La, and a luminance integrated value of the light that outgoes in a range from 110° to 250° (light outgoing from an opposite face that is opposite to the emission face of the light guide plate or the light guide member) is denoted by Lb, based on the above-specified angle as a standard. That is, above-described La represents the luminance integrated value on the emission face, and above-described Lb represents the luminance integrated value on the opposite face. A ratio between them (La/Lb) is defined as the contrast.

That is, if (Cx/Cy) is less than 0.5, luminance that outgoes from the emission face is lower and luminance that outgoes to the opposite face is higher than those of an original design of the light guide member, whereby a capacity as a planar light source device or a lighting device may be lacked. This is caused by that the sealing layer of the sealing member for a light guide plate is embedded into the concave portions so as to decrease diffusibility of light.

### 2-2-4. Method for Manufacturing Sealing Member for Light Guide Plate

A method for manufacturing the sealing member for a light guide plate according to the present invention is not limited particularly as far as the above-described sealing member for a light guide plate can be manufactured, but as an example, a method including following steps (A1) and (A2) can be exemplified.

Step (A1): Applying an energy beam-curable composition onto the coating base.

Step (A2): After the application, semicuring the above-described energy beam-curable composition so as to form a sealing layer of the sealing member for a light guide plate.

The energy beam-curable composition contains urethane (meth)acrylate having a saturated cycloaliphatic group as an essential component. The urethane (meth)acrylate, which is a monomer, is a raw material for the sealing layer of the sealing member for a light guide plate, and the above-described repeating unit can be formed by polymerizing the monomer.

A method for synthesizing the urethane (meth)acrylate is not limited particularly, but as an example, a method including: firstly synthesizing a double-functionality intermediate; and synthesizing hydroxyl group-containing alkyl (meth)acrylate or isocyanate group-containing alkyl (meth)acrylate at both terminals of the intermediate can be exemplified.

More specifically, an example of the method for synthesizing the urethane (meth)acrylate which corresponds to the above-described repeating unit of General Formula (1) includes steps of: [1] reacting ester having R² and diol having R³ at a mole ratio of m(r+s) : m, and further reacting them with (m+1) mol of diisocyanate having R¹, thereby obtaining an intermediate that has -N=C=O groups at both terminals; and [2] thereafter, reacting 2 mol of hydroxyl group-containing alkyl (meth)acrylate with 1 mol of the above-described intermediate, thereby obtaining urethane (meth)acrylate represented by below-described General Formula (2).

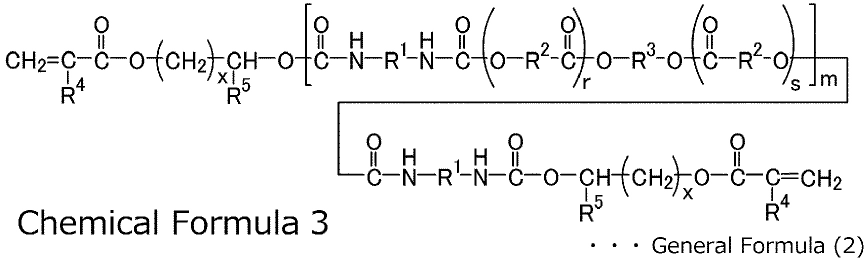

(In General Formula (2), R¹ denotes a saturated cycloaliphatic structure, R² denotes a straight or branched saturated aliphatic having 5 to 10 carbon atoms, R³ denotes a saturated cycloaliphatic structure that is different from R¹, R⁴ denotes a hydrogen atom or a methyl group, R⁵ denotes a hydrogen atom, a methyl group or an ethyl group, m denotes 1 to 4, r and s respectively denote 0 to 2, and a sum of r and s is 0 to 2, and x denotes 0 to 3.)

As described above, the procedures for synthesizing the respective raw materials have been shown, but the procedures for synthesizing the urethane (meth)acrylate according to the present invention are not limited to them, and the respective raw materials may be mixed at the same time. However, the above-described synthesis procedures are superior in controllability of its molecular weight.

The energy beam-curable composition is prepared by adding a photopolymerization initiator for initiating polymerization of the monomer to the monomer which generates the repeating unit.

As the photopolymerization initiator, a radical polymerization initiator such as acetophenone-based, benzophenone-based, thioxanthone-based, benzoin and benzoin methyl ether can be used alone or in combination of two kinds or more as appropriate.

To the energy beam-curable composition, the above-described various kinds of additives such as an ultraviolet absorber, a leveling agent and an antistatic agent may be added.

A ratio of the monomer, the photopolymerization initiator and the arbitrary various kinds of additives in the energy beam-curable composition varies according to kinds of the respective materials, and the ratio is difficult to be specified univocally, but the monomer can be 50% by mass or more and 99% by mass or less, the photopolymerization initiator can be 0.5% by mass or more and 10% by mass or less, and the various kinds of the additives can be 50% by mass or less, as an example. Further, organic solvent such as toluene may be added into the energy beam-curable composition.

For applying the prepared energy beam-curable composition onto the coating base, a coating method such as a roll coating method and a gravure coating method is preferably adopted from the perspectiveof continuous productivity. By this coating methods, the energy beam-curable composition can be applied so as to form a thin layer of the sealing layer of the sealing member for a light guide plate that has a thickness of, for example, 50 µm or less, preferably 25 µm or less, and more preferably 10 µm or less.

The semicure in Step (A2) can be performed by irradiation of ultraviolet rays from an ultraviolet irradiation apparatus. The ultraviolet light source to be used is not limited particularly, but, for example, a low-pressure mercury lamp, a middle-pressure mercury lamp, a high-pressure mercury lamp, a metal halide lamp and the like, which have emission distribution at a wavelength of 400 nm or less, can be used. In a case of using a composition that contains an acrylic compound as an active energy beam-curable component, a high-pressure mercury lamp or a metal halide lamp, which emits most of light at 400 nm or less, is preferably used as the ultraviolet light source, if considering an absorption wavelength exhibited by a general photopolymerization initiator.

By semicuring the energy beam-curable composition, the sealing member for a light guide plate in which the sealing layer is formed on the coating base can be obtained.

### 2-2-5. Using Method

The sealing member for a light guide plate according to the present invention is used by being bonded (laminated) to the surface of the light guide member having the concave portions and being irradiated with ultraviolet rays. A bonding method may be a well-known method, for example, a method of heating the sealing member for a light guide by so-called heat lamination and the like can be exemplified, and the ultraviolet irradiation can be performed by the method shown above in Step (A2).

The completed light guide plate is a plate having transparency and a refractive index that are equivalent to those of the light guide member, which is, for example, an acrylic plate or the like, and can increase a thickness of the light guide member.

### 3. Application of Planar Light Source Device or Lighting Device

The light guide plate using the sealing member for a light guide plate according to the present invention can be used as a planar light source device or a lighting device, by providing one or plural light sources at a position on a side face (an end face) of the light guide plate. The light source is not limited particularly, and a well-known light source can be used, but an LED light source is preferably used from the perspectiveof size reduction and electric power consumption.

Further, in a case of using the planar light source device as a back light, a reflection member and/or a diffusion member can be provided to one of the faces of the light guide plate. The reflection member and the diffusion member are not limited particularly, and well-known reflection member and diffusion member may be used.

The planar light source device or the lighting device can be used as a transmission-type display device that is a displaying device, a planar light source device for an edge-type display device in a reflection-typedisplay device , and a lighting device.

### Examples

Hereinafter, the present invention will be described by way of examples and comparative examples, but the present invention is not limited to description of the examples.

A coating layer with a thickness of 10 µm was formed of UV-curable acrylic resin (containing a photopolymerization initiator) onto a PMMA sheet which had a size of 130 mm × 90 mm and a thickness of 2 mm, and was cured by being irradiated with UV light rays from a surface of the PMMA sheet that is opposite to the coating layer, while being pressed by a metal mold which had convex lens-shaped dotted shapes with a diameter of about 40 µm and a height of about 10 µm (convex lens density: about 100 /mm²), whereby the light guide member having concave portions to be used in the present invention was produced. A surface of the thus obtained light guide member was observed by a laser microscope, whereby it could be confirmed that the light guide member having the concave portions, which had concave lens-shaped dotted shapes with a size (a diameter) of about 40 µm and a depth of about 8 µm at a density of about 100/mm², was obtained.

### [Production Example 1]

### Synthesis of Compound 1:

After preparing 196.29 g (1 mol) of tricyclodecanedimethanol and 22.828 g (0.2 mol) of ε-caprolactone in a flask, a temperature of them was increased to 120°C, and 50 ppm of monobutyltin oxide was added as a catalyst. Thereafter, a reaction was caused in a nitrogen gas stream until the remaining ε-caprolactone became 1% or less, which was measured by gas chromatography, thereby obtaining diol (1).

After preparing 444.56 g (2 mol) of isophorone diisocyanate in another flask, 424.57 g (1 mol) of the diol (1) was added thereto at a reaction temperature of 70°C, 232.24 g (2 mol) of 2-hydroxyethyl acrylate and 0.35 g of dibutyl tin laurylate were added when a remaining isocyanate group became 5.7%, and a reaction was continued until the remaining isocyanate group became 0.1%, thereby obtaining urethane acrylate (Compound 1), which was a monomer.

### [Production Example 2]

Similarly to Production Example 1 except for changing the using amount of the ε-caprolactone from 0.2 mol to 2 mol, Compound 2, which was a monomer, was obtained (Compound 2 has a common structure with that of General Formula (1a) in which m is 1, except that both terminals were acryloyl groups).

### [Production Example 3]

Similarly to Production Example 1 except for changing the using amount of the ε-caprolactone from 0.2 mol to 1 mol, Compound 3, which was a monomer, was obtained.

### [Production Example 4]

Similarly to Production Example 1 except for using no ε-caprolactone, Compound 4, which was a monomer, was obtained.

### [Production Example 5]

After preparing 222.28 g (1 mol) of isophorone diisocyanate and 260.28g (2 mol) of 2-hydroxypropyl acrylate in a flask, a temperature of them was increased to 70°C, 0.35 g of dibutyl tin laurylate was added as a catalyst, and a reaction was continued until a remaining isocyanate group became 0.1%, thereby obtaining urethane acrylate (Compound 5), which was a monomer.

### [Production Example 6]

After preparing 210.27 g (1 mol) of 2,2,4-trimethyl hexamethylene diisocyanate and 232.24 g (2 mol) of 2-hydroxyethyl acrylate in a flask, a temperature of them was increased to 70°C, 0.35 g of dibutyl tin laurylate was added as a catalyst, and a reaction was continued until a remaining isocyanate group became 0.1%, thereby obtaining urethane acrylate (Compound 6), which was a monomer containing no saturated cycloaliphatic group.

### [Example 1]

Using a wire bar, below-described energy beam-curable composition for manufacturing a sealing layer (PI) was applied onto a coating base {Technolloy (thickness of 100 µm), an acrylic film produced by Sumitomo Chemical Co., Ltd.}. The energy beam-curable composition (PI) contained toluene, and a solid content (NV) thereof was 40%.

**Table 1**

| Energy Beam-Curable Composition (P1), Excluding Toluene | | |
|---|---|---|
| Kind | Item Name | Part by Mass |
| Monomer | Compound 1 | 94.5 |
| Initiator | IRGACURE184 (Produced by BASF Japan Ltd.) | 5.5 |

A coating thickness of the energy beam-curable composition (P1) was adjusted so that a film thickness after being dried might be 2 µm. The coating film was dried in a clean oven, of which an internal temperature of a drying furnace was set at 100°C, and was subsequently semicured by ultraviolet rays that were irradiated from a high-pressure mercury lamp in a condition of a cumulative light amount of 200 mJ/cm² in the atmosphere, thereby obtaining the sealing member for a light guide plate in which the sealing layer with a unreacted acryloyl group remaining therein was formed on one face of the coating base.

The surface of the sealing member on a sealing layer side and the face of the above-produced light guide member having the concave portions were subjected to heat lamination in a condition at a temperature of 100°C, and thereafter, the unreacted acryloyl group remaining in the sealing layer was reacted to be cured completely by irradiation from a high-pressure mercury lamp in a condition of a cumulative light amount of 3000 mJ/cm², thereby obtaining the light guide plate of Example 1.

### [Examples 2 to 7 and Comparative Examples 1 to 3]

Similarly to Example 1 except for replacing the monomers listed in Table 1 with respective monomers listed in a blend table of Table 2 and adjusting film thicknesses as shown in Table 2, light guide plates of Examples 2 to 6 and Comparative Examples 1 to 2 were obtained.

Incidentally, M305 (produced by TOAGOSEI CO., LTD.) used in Comparative Examples 2 and 3 is pentaerythritol triacrylate.

Subsequently, similarly to Example 1 except for omitting the semicuring step by the irradiation of ultraviolet rays from the high-pressure mercury lamp, a light guide plate of Example 7 was obtained.

Further, similarly to Comparative Example 2 except for omitting the semicuring step by the irradiation from the high-pressure mercury lamp, a light guide plate of Comparative Example 3 was obtained.

**Table 2**

| | Film Thickness (µm) | Monomer | Presence or Absence of Semicuring Step |
|---|---|---|---|
| Example 1 | 2 | Compound 1 | Present |
| Example 2 | 2 | Compound 2 | Present |
| Example 3 | 2 | Compound 3 | Present |
| Example 4 | 2 | Compound 4 | Present |
| Example 5 | 2 | Compound 5 | Present |
| Example 6 | 6 | Compound 1 | Present |
| Example 7 | 2 | Compound 1 | Absent |
| Comparative Example 1 | 2 | Compound 6 | Present |
| Comparative Example 2 | 2 | M3O5 (produced by TOAGOSEI CO., LTD.) | Present |
| Comparative Example 3 | 2 | M3O5 (produced by TOAGOSEI CO., LTD.) | Absent |

The light guide plates obtained in the above-described examples and comparative examples were evaluated.

### [Peel Strength]

The light guide plate obtained in each of the above-described examples and comparative examples was cut to have a width of 25 mm, and the sealing member was pulled, while fixing the light guide member, by a method conforming to JIS K6854, thereby measuring 90° peel strength at an interface between the sealing member and the light guide member.

### [Surface Roughness (Average Value of Arithmetic average roughness Ra)]

The light guide plate obtained in each of the above-described examples and comparative examples was peeled at the interface between the sealing layer and the light guide member, and gold particles were deposited by vacuum evaporation onto a surface of the thus exposed sealing layer to provide a thickness of 15 nm by using a vacuum evaporator (SC-701AT produced by Sanyu Electron Co., Ltd.). A surface of this sample was observed by using a confocal laser microscope (OLS3000 produced by Olympus Corporation), thereby calculating an average value of arithmetic average roughness Ra on respective segments of lines, which passed at a center point of a rectangle having a maximum area among rectangles inscribed in the surface shape of the concave portion of the light guide member, and were parallel to respective sides of the rectangle.

### [Contrast Ratio between Before and After Sealing of Light Guide Member]

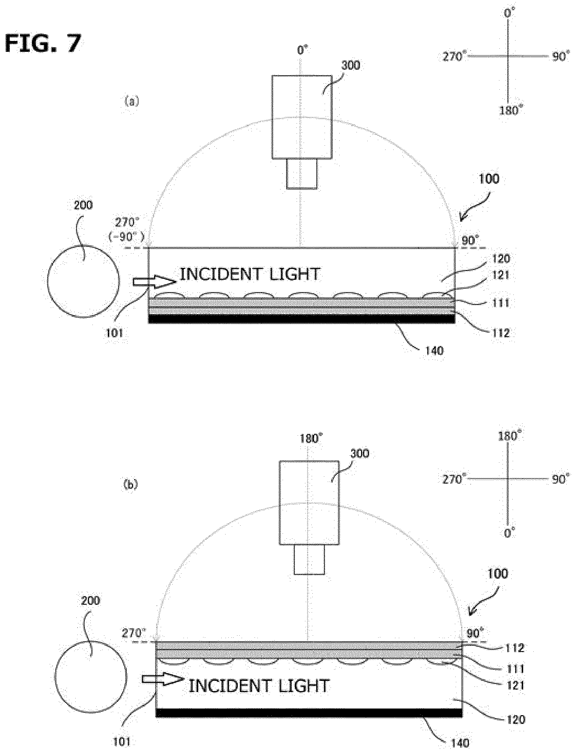

Figs. 7(a) and 7(b) illustrate schematic views of an example of a measurement device used for contrast evaluation of the light guide plate. Contrast of the light guide plate obtained by this measurement device in each of the examples and the comparative examples was evaluated by a below-described method.

Firstly, as shown in Fig. 7(a), an LED light source (200) was provided on a light incident end face 101 of the light guide plate of each of the examples and the comparative examples, and in order to avoid influence of light from a back face, a black felt sheet 140 (a black felt sheet, FU-714 produced by Waki Sangyo Co., Ltd, thickness of 2 µm) was provided on an opposite face (a lower face in Fig. 7(a)) that is a surface opposite to a light emission face (an upper face in Fig. 7(a)) of the light guide plate of each of the example and the comparative examples.

Subsequently, by using a luminance meter 300 (GP-5 produced by MURAKAMI COLOR RESEARCH LABORATORY CO.,LTD.), a luminance integrated value (La) of light outgoing from the emission face in a range from -70° to 70° based on a specified angle as a standard was measured, where a direction perpendicular to the end face of the light guide plate, in which light from the light source is incident (a direction from left to right in Fig. 7(a)), is specified as 90°, and a normal direction with respect to the emission face of the light guide body (a direction from a bottom to a top in Fig. 7(a)) is specified as 0°. Incidentally, as the outgoing direction, when the normal direction of the emission face was specified as 0°, a direction toward the light incident end face (101) seen from the luminance meter 300 was defined as - (negative), and an opposite direction thereof was defined as + (positive).

Next, the light guide plate was disposed upside down as shown in Fig. 7(b), a luminance integrated value (Lb) of light outgoing to the opposite face that was the face opposite to the emission face was measured similarly in a range from 110° to 250° based on the above-specified angle as the standard. Incidentally, as the outgoing direction, the normal direction of the opposite face was specified as 180° based on the standard of the specified angle, a direction toward the light incident end face (101) seen from the luminance meter 300 was defined as - (negative), and an opposite direction thereof was defined as + (positive).

From the above description, where a ratio between the luminance integrated values of the emission face and the opposite face of the light guide plate (La/Lb) is represented as contrast (C), a contrast ratio between before and after the sealing of the light guide member was evaluated based on a value of a ratio (Cx/Cy) between: contrast (Cx) of the light guide plate (100) obtained in each of the examples and the comparative examples; and contrast (Cy) of the light guide member (120) alone provided with no sealing member for a light guide plate, which was measured by a method similar to the above-described method for measuring the light guide plate.

Respective evaluation results will be shown in Table 3. Evaluation criteria in Table 3 will be as follows.
"Peel Strength"
   ⊚ More than 3.0 N/25mm
   ○ 1.0 N/25 mm to 3.0 N/25 mm
   Δ 0.6 N/25 mm or more and less than 1.0 N/25 mm
   × Less than 0.6 N/25 mm
"Average Value of Arithmetic average roughness Ra"
   ○ Less than 0.02 µm
   Δ 0.02 µm to 0.10 µm
   × More than 0.10 µm
"Contrast Ratio between Before and After Sealing of Light Guide Member"
   ○ More than 0.7
   Δ 0.5 to 0.7
   × Less than 0.5

**Table 3**

| | 90 Degree Peel Strength(N/25mm) | Average Value of Arithmetic Mean Roughness Ra (µm) | Contrast Ratio between Before and After Sealing of Light Guide Member |
|---|---|---|---|
| Example 1 | ⊚ 3.5 | ○ 0.003 | ○ 0.81 |
| Example 2 | ○ 1.5 | ○ 0.005 | ○ 0.85 |
| Example 3 | ○ 1.0 | ○ 0.017 | ○ 0.73 |
| Example 4 | ○ 1.3 | ○ 0.002 | ○ 0.92 |
| Example 5 | ⊚ >5.0 | ○ 0.004 | ○ 0.74 |
| Example 6 | Δ 0.7 | ○ 0.004 | Δ 0.65 |
| Example 7 | ⊚ >5.0 | Δ 0.043 | Δ 0.62 |
| Comparative Example 1 | × 0.5 | ○ 0.002 | ○ 1.07 |
| Comparative Example 2 | × 0.1 | ○ 0.001 | ○ 1.14 |
| Comparative Example 3 | ⊚ >5.0 | × 0.743 | × 0.29 |

As shown in Table 3, in each of Examples 1 to 7 of the present invention, the light guide plate having: the sufficiently high peel strength; the smoothness of the lid face of the concave portions of the sealing member for a light guide plate shown by the sufficiently small average value of the arithmetic average roughness Ra; and the sufficiently high contrast ratio between before and after the sealing of the light guide member could be obtained. In particular, in Examples 1 to 5, excellent properties were exhibited in all of the evaluation items.

Herein, in Example 6, where the film thickness in Example 1 was increased as shown in Table 2, the light guide plate, of which the peel strength and the contrast ratio between before and after the sealing of the light guide member were confirmed to be decreased shown in Table 3, but which had: the sufficiently high peel strength; the smoothness of the lid face of the concave portions of the sealing member for a light guide plate shown by the sufficiently small average value of the arithmetic average roughness Ra; and the sufficiently high contrast ratio between before and after the sealing of the light guide member, could be obtained.

Further, in Example 7, where the semicuring step by the ultraviolet irradiation before bonding with the light guide member of Example 1 was omitted, the average value of the arithmetic average roughness Ra and the contrast ratio between before and after the sealing of the light guide member were smaller/lower than those of other examples, as shown in Table 3. The reason for this is considered that, because of not performing the semicuring, the embedding property of the light guide member into the concave portions was slightly deteriorated, but nonetheless, it was possible to obtain the light guide plate having: the smoothness of the lid face of the concave portions of the sealing member for a light guide plate shown by the sufficiently small average value of the arithmetic average roughness Ra; and the sufficiently high contrast ratio between before and after the sealing of the light guide member; and in addition, the highest peel strength.

On the other hand, in the case of using the urethane (meth)acrylate compound having no saturated cycloaliphatic group as shown in Comparative Example 1, the light guide plate having sufficiently high peel strength could not be obtained. The reason for this is considered that, because of having no saturated cycloaliphatic group, cohesive force of the resin that was composed of the repeating unit structure was low.

Subsequently, also in the case of using the acrylate compound having no saturated cycloaliphatic group nor urethane bond as shown in Comparative Example 2, the light guide plate having sufficiently high peel strength could not be obtained. The reason for this is considered that the acrylate compound having no saturated cycloaliphatic group nor urethane bond had poorer adhesion with the light guide member than those of the compounds used in the present Examples 1 to 7.

Then, also in the case of using the acrylate compound having no saturated cycloaliphatic group nor urethane bond, which was the same compound as that of Comparative Example 2, by omitting the semicuring step by the ultraviolet irradiation before bonding with the light guide member as shown in Comparative Example 3, the obtained light guide plate exhibited the high peeling strength, but the light guide plate did not have: the sufficient smoothness of the lid face of the concave portions of the sealing member for a light guide plate shown by the average value of the arithmetic average roughness Ra; nor the sufficiently high contrast ratio between before and after the sealing of the light guide member. The reason for this is considered that, since the acrylate compound that was not semicured by the ultraviolet irradiation had high flowability, the acrylate compound was embedded into the concave portions of the light guide member.

As is clear from the above-described examples and comparative examples, it is very important for the sealing layer of the sealing member for a light guide plate to contain the resin composed of the repeating unit derived from the urethane (meth)acrylate having the saturated cycloaliphatic group, as the sealing member for a light guide plate which suppresses the embedding of the light guide member into the concave-shaped portions and has the high smoothness of the lid face of the concave-shaped portions, whereby the utility of the sealing member for a light guide plate according to the present invention has been shown.

### Reference Signs List

- 100: light guide plate
- 101: light incident end face
- 102: emission face
- 110: sealing member for light guide plate
- 111: sealing layer
- 112: coating base
- 120: light guide member
- 121: concave portion
- 140: black felt sheet
- 200: LED light source
- 300: luminance meter

## Claims

1. A sealing member for a light guide plate, which is made of one layer or more to be laminated to a face having concave portions
so as to seal at least any of gas, liquid and vacuum, which has a refractive index that is different from a refractive index of a light guide member, into insides of the concave portions
of the light guide member having: an emission face in which light incident from an end face is bent and outgoes to a surface direction; and the plural concave portions on the emission face and/or an opposite face that faces the emission face, wherein
a layer contact with the face having the concave portions of the sealing member for a light guide plate is made of a sealing layer which contains resin composed of a repeating unit derived from urethane (meth)acrylate having a saturated cycloaliphatic group.

2. The sealing member for a light guide plate according to claim 1, wherein the urethane (meth)acrylate having the saturated cycloaliphatic group is
urethane (meth)acrylate (I) which is a reactant of: hydroxyl group-containing alkyl (meth)acrylate; diol; and diisocyanate or
urethane (meth)acrylate (II) which is a reactant of: isocyanate group-containing alkyl (meth)acrylate; diol; and diisocyanate.

3. The sealing member for a light guide plate according to claim 1, wherein the acrylate (I) and (II) having the saturated cycloaliphatic group includes:
below-described Structure A containing a saturated cycloaliphatic group R¹; and
below-described Structure C containing a saturated cycloaliphatic group R³, where,
Structure A: -CO-NH-R¹-NH-CO-
Structure C: -O-R³-O-.

4. The sealing member for a light guide plate according to claim 3, wherein the acrylate (I) or (II) having the saturated cycloaliphatic group further includes below-described Structure B containing a saturated aliphatic chain R², where,
Structure B: -O-R²-CO-.

5. A light guide plate comprising: at least the light guide member; and the sealing member for a light guide plate according to any one of claims 1 to 4.

6. The light guide plate according to claim 5, wherein, in a maximum rectangular shape on the sealing layer of the sealing member for a light guide plate to be inscribed in the surface shape of the concave portion, an average value of arithmetic average roughness Ra on lines which pass at a center point of the rectangular shape and are parallel to respective sides of the rectangle in the rectangular shape is 0.1 µm or less.

7. The light guide plate according to claim 5 or 6, wherein 90° peel strength (conforming to JIS K6854) at an interface between the sealing layer of the sealing member for a light guide plate and the light guide member is 0.6 N/25 mm or more.

8. The light guide plate according to any one of claims 5 to 7, wherein, in a case where
a normal direction with respect to the emission face of the light guide plate or the light guide member is specified as 0°, and
a direction perpendicular to an end face of the light guide plate or the light guide member to which light is incident from a light source is specified as 90°, where
a value (La) is obtained by integrating luminance in a range from -70° to 70° among light that is incident from the end face of the light guide plate or the light guide member, and outgoes from the emission face of the light guide plate or the light guide member,
a value (Lb) is obtained by integrating luminance in a range from 110° to 250° among light that outgoes from an opposite face on an opposite side of the emission face of the light guide plate or the light guide member, and
a ratio (La/ Lb) is defined as contrast (C),
a ratio (Cx/Cy) between contrast (Cx) of the light guide plate and contrast (Cy) of the light guide member is 0.5 or more.

9. The light guide plate according to any one of claims 5 to 8, wherein a reflection member and/or a diffusion member is further laminated to the light guide plate.

10. A lighting device or a display device , comprising the light guide plate according to any one of claims 5 to 9 and a light source.
